# NEW EUROPEAN PATENT SPECIFICATION

(11) **EP 2 322 427 B2**
(45) Date of publication and mention of the opposition decision: **29.07.2020**
(45) Mention of the grant of the patent: 14.06.2017
(21) Application number: 10251927.9
(22) Date of filing: 15.11.2010
(51) Int. Cl.: B64C 11/20, B64D 45/00, F04D 29/32

(54) **Airfoil assembly and airfoil assembly wear indicating method**
Verschleissanzeige einer Flugzeugkomponente
Indicateur d'usure de composant de surface portante

(30) Priority: 17.11.2009 US 620537
(43) Date of publication of application: 18.05.2011
(73) Proprietor: Hamilton Sundstrand Corporation, Windsor Locks, CT 06096-1010 (US)
(72) Inventor: Smith, Blair A., South Windsor, CT 06074 (US); Carvalho, Paul A., Westfield, MA 07085 (US); Huth, Brian P., Westfield, MA 01085 (US)
(74) Representative: Dehns

(56) References cited:
- EP-A1- 1 462 606
- EP-A2- 0 433 763
- EP-A2- 1 764 476
- EP-A2- 1 995 412
- WO-A1-2008/157013
- FR-A1- 2 867 096
- GB-A- 662 110
- GB-A- 2 039 526
- US-A- 1 860 557
- US-A- 2 431 184
- US-A- 2 648 388
- US-A- 4 895 491
- US-A1- 2008 265 095

## Description

### BACKGROUND

This invention relates to protecting airfoil components from foreign object damage and, more particularly, an indicator that alerts an operator to wear.

Airfoil components are used in various types of aircraft for propeller blades and other engine components, such as vanes and blades. The airfoil components are typically located within an air stream that may include foreign objects such as sand, ice, water droplets, stones, birds, or other debris. The foreign objects strike the airfoil component, particularly a leading edge of the airfoil component. Airfoil components that are made of polymer composites may be particularly vulnerable to erosion and damage caused by the foreign objects because of the relatively soft nature of a polymer composite, although airfoil components made of other types of material are also vulnerable.

To protect a body of the airfoil component, a protective sheath may be mounted to the leading edge. The protective sheath is typically made from a hard material that can withstand cracking, fracture, chipping, and breaking from impact with the foreign objects.

The protective sheaths of some airfoil components, especially those with composite airfoil bodies, include plates made of high strength material (e.g., titanium plates) secured to the suction and pressure sides of the airfoil body. The plates form a first sheath about a portion of the airfoil. The plates strengthen the airfoil and slow erosion of the airfoil body. A second sheath made of another material (e.g., nickel) covers a portion of the plates to prevent the plates from peeling away from the airfoil body and to slow erosion. The second sheath has a more complex geometry than the first sheath. Forming the second sheath of another material desirably reduces costs and manufacturing complexity as is known. The second sheath wears during operation. Sufficient wear can expose the first sheath.

Exemplary multi-layer airfoils are disclosed in GB 2039526, US 1860557, US 2648388, EP 0433763 and US 2008/265095.

### SUMMARY

Viewed from a first aspect, the present invention provides an airfoil assembly comprising: an airfoil body extending between a leading edge, a trailing edge, a suction side, and a pressure side; the first protective sheath having an outer side and an inner side that forms a cavity for receiving at least a portion of the airfoil body, the inner side being bonded to the leading edge of the airfoil body; an indicator sheath having an outer side and an inner side, the indicator sheath being adhesively bonded to the first protective sheath, wherein at least a portion of the indicator sheath is positioned forward of the first sheath relative to the leading edge of the airfoil; and the second protective sheath, at least a portion of the second protective sheath being positioned forward of the indicator sheath relative to the leading edge of the airfoil.

Viewed from a second aspect, the present invention provides an airfoil assembly wear indicating method, comprising: providing an airfoil body that extends between a leading edge, a trailing edge, a suction side, and a pressure side with an indicator sheath, at least a portion of the indicator sheath being secured between a first protective sheath and a second protective sheath near the leading edge of the airfoil body, the indicator sheath being adhesively bonded to the first protective sheath, the first sheath having an inner side that forms a cavity for receiving at least a portion of the airfoil body, the inner side being bonded to the leading edge of the airfoil, at least a portion of the indicator sheath being positioned forward of the first protective sheath relative to the leading edge of the airfoil, and at least a portion of the second protective sheath being positioned forward the indicator sheath relative to the leading edge of the airfoil.

These and other features of the example disclosure can be best understood from the following specification and drawings, the following of which is a brief description:

### BRIEF DESCRIPTION OF THE DRAWINGS

Figure 1 shows a cross section of an example airfoil assembly
Figure 2 shows a portion of the Figure 1 airfoil assembly.
Figure 2A shows the Figure 2 airfoil assembly having a worn shroud.
Figure 3 shows another example airfoil assembly having a different nose shape.
Figure 4 shows yet another example airfoil assembly having a different nose shape.
Figure 5 shows yet another example airfoil assembly having a different nose shape.
Figure 6 shows an example method of making a shroud for the Figure 5 assembly.

### DETAILED DESCRIPTION

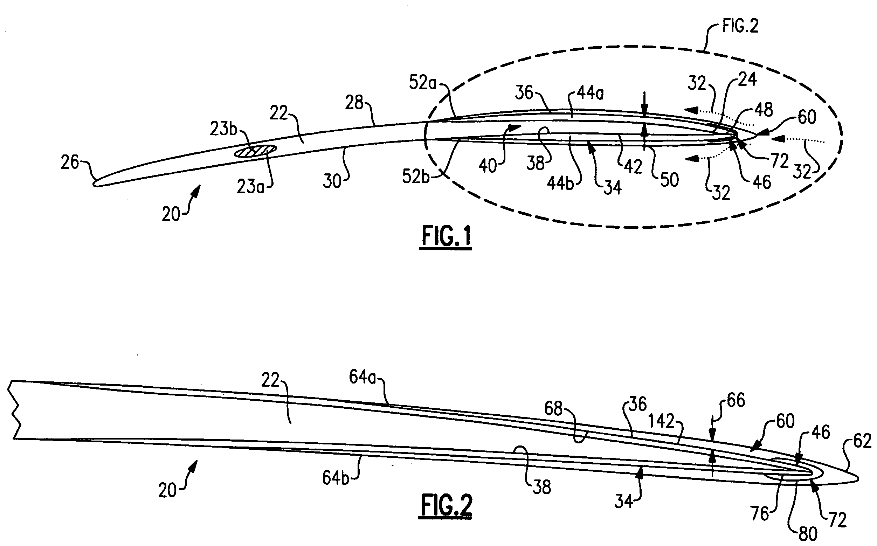

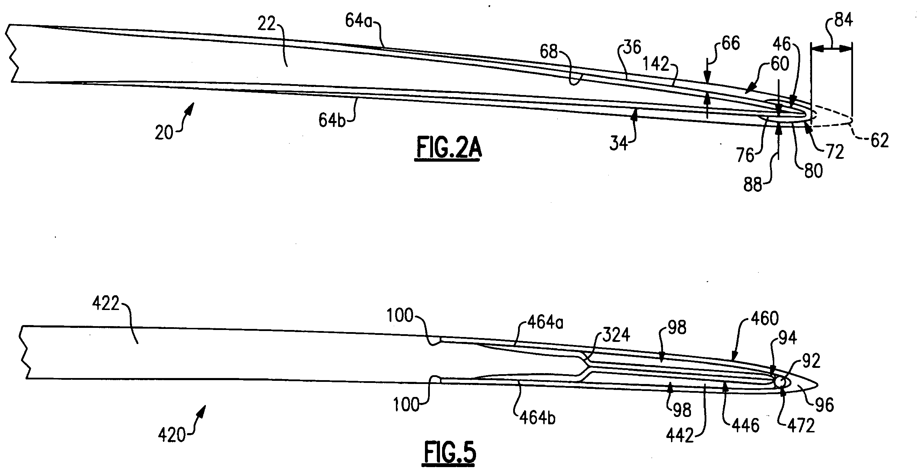

Figures 1 and 2 illustrate selected portions of an example airfoil assembly 20, which is shown in cross-section and may be used as a fan blade, helicopter rotor blade, propeller, or other similar arrangement that utilizes airfoil shaped blades or vanes. In this case, the airfoil assembly 20 includes an airfoil body 22 that extends between a leading edge 24, a trailing edge 26, a suction side 28, and a pressure side 30. In general, the leading edge 24, the trailing edge 26, the suction side 28, and the pressure side 30 are made with reference to an intended air flow 32 over the airfoil assembly 20.

The airfoil assembly 20 includes a protective sheath 34, which may also be referred to as a first sheath. The sheath 34 is bonded to the leading edge 24 of the airfoil body 22 for protecting the underlying airfoil body 22 from foreign body impact, such as debris within the air flow 32 or a bird strike. As an example, the airfoil body 22 may be formed of a composite material (as illustrated in the cutaway section) that may be less resistant to impact than metallic airfoils. The composite may include a polymer matrix 23a and reinforcement fibers 23b distributed through the matrix. The polymer matrix 23a and reinforcement fibers 23b may be any suitable types of materials for the intended end use, such as epoxy polymer and graphite fibers.

In the illustrated example, the sheath 34 includes an outer side 36 and an inner side 38 that forms a cavity 40 for receiving at least a portion of the airfoil body 22. The inner side 38 is bonded to at least the leading edge 24 of the airfoil body 22, and in the illustrated example, also portions of the suction side 28 and pressure side 30.

The sheath 34 is formed from a titanium-based metallic material. The titanium material may be relatively pure titanium or a titanium alloy. The titanium-based metallic material is relatively ductile and serves to absorb energy from the impact of any foreign objects on the airfoil assembly 20. An adhesive 42 bonds the inner side 38 of the sheath 34 and the airfoil body 22 together. For instance, the adhesive 42 may be a polymer adhesive, such as an epoxy. Other examples of the adhesive 42 include film adhesives, such as 3M2214, 3MAF111, EA9346.5, EA9628.

The example sheath 34 includes a first plate 44a bonded on the suction side 28 of the airfoil body 22 and a second plate 44b bonded on the pressure side 30. Initially, the first and second plates 44a and 44b are separate and distinct pieces that are then assembled onto the airfoil body 22 using the adhesive 42.

In this case, the first and second plates 44a and 44b meet at a nose 46 of the sheath 34 and form a seam 48 where the first plate 44a is bonded directly to the second plate 44b. The adhesive 42 may also be used to bond the first and second plates 44a and 44b together at the seam 48. Alternatively, the first and second plates 44a and 44b may be metallurgically bonded at the seam 48, such as through diffusion bonding or welding in a known manner.

In the illustrated example, the first and second plates 44a and 44b each include a wall thickness 50 that tapers from the nose 46 to rearward ends 52a and 52b of the respective first and second plates 44a and 44b. The taper of the sheath 34 facilitates energy transfer between the sheath 34 and the airfoil body 22.

The example airfoil assembly 20 additionally includes another protective sheath 60, which may also be referred to as a second sheath. The sheath 60 is bonded to a portion of the outer side 36 of the sheath 34. The sheath 60 may be formed of a nickel-based metallic material and further facilitates protecting the underlying airfoil body 22. For instance, the sheath 34 that is formed from the titanium-based metallic material provides ductility that absorbs energy from an impact on the airfoil assembly 20 and the sheath 60, which is not as ductile as the material of the sheath 34, provides a relatively high hardness that protects from erosion. The sheath 60 also protects against the first plate 44a separating from the second plates 44b due to the location of the sheath 60 relative to the seam 48. Given this description, one of ordinary skill in the art will recognize other types of materials for use as the sheath 60 to meet their particular needs. Example materials include nickel-cobalt alloys, stainless steel, Inconel, Waspaloy, Hastelloy, etc. As can be appreciated, the sheath 60 is geometrically more complex than the sheath 34.

The sheath 60 includes a nose 62 and rearward ends 64a and 64b. In this case, a wall thickness 66 of the sheath 60 tapers between the nose 62 and the rearward ends 64a and 64b in order to facilitate aerodynamics of the airfoil assembly 20 and transfer of energy between the sheath 60, the sheath 34, and the airfoil body 22.

The sheath 60 may be formed using any suitable process, such as electroforming, and then assembled onto the airfoil assembly 20. For instance, the sheath 60 may be pre-fabricated as a separate and distinct piece and then bonded to the outer side 36 of the sheath 34. In this regard, the airfoil assembly 20 may include another adhesive 142 between an inner surface 68 of the sheath 60 and the outer side 36 of the sheath 34. In some examples, the adhesive 142 may be a polymeric adhesive, such as epoxy, that is the same as the adhesive 42. In another example, the adhesive 142 is different than the adhesive 42.

In this disclosure, like reference numerals designate like elements where appropriate, and reference numerals with the addition of one-hundred or multiples thereof designate modified elements that are understood to incorporate the same features and benefits of the corresponding original elements.

The example airfoil assembly 20 additionally includes an indicator sheath 72 positioned forward the sheath 34 relative to the leading edge 24. An inner side 76 of the indicator sheath 72 is adhesively bonded to a portion of the outer side 36 of the sheath 34. More specifically, the indicator sheath 72 is adhesively bonded near the seam 48. The sheath 60 covers, and is adhesively bonded to, an outer side 80 of the indicator sheath 72.

Referring to Figure 2a, during operation erosion and foreign object damage wears the sheath 60 at the nose 62. In this example, wearing the sheath 60 a distance 84 exposes the indicator sheath 72. The example indicator sheath 72 is copper, which is visually distinguishable from the sheath 60. The indicator sheath 72, when exposed, is a visual cue that the nose 62 of the airfoil assembly 20 has worn through the distance 84 of the sheath 60. After viewing the indicator sheath 72, a mechanic can replace or repair the sheath 60 before the airfoil assembly 20 wears more than the distance 84. Accordingly, the sheath 60, which is less expensive than the sheath 34 in this example, is repaired before the sheath 34 is worn.

A thickness 88 of the indicator sheath 72 and other dimensions (e.g., length) can be adjusted to provide the desired visual cue. In one example, the indicator sheath 72 is tapered such that more of the indicator sheath 72 is exposed as the distance 84 of the worn area increases.

In the illustrated example, the airfoil body 22 may be considered to be a wide chord length airfoil that may be associated with a relatively large component, such as a propeller, helicopter rotor blade, or fan blade of a gas turbine engine. In this regard, the sheath 34 may be designed to cover a relatively large surface area of the suction side 28 and the pressure side 30. For instance, the coverage may be represented in terms of an amount of area that is covered by the sheath 34 in comparison to an amount of area that is not covered by the sheath 34. In one example, the ratio of the surface area covered to the surface area not covered may be about 0.1 - 1. In other examples, the coverage may be represented by a length of the sheath 34 in comparison to a chord length of the airfoil body 22.

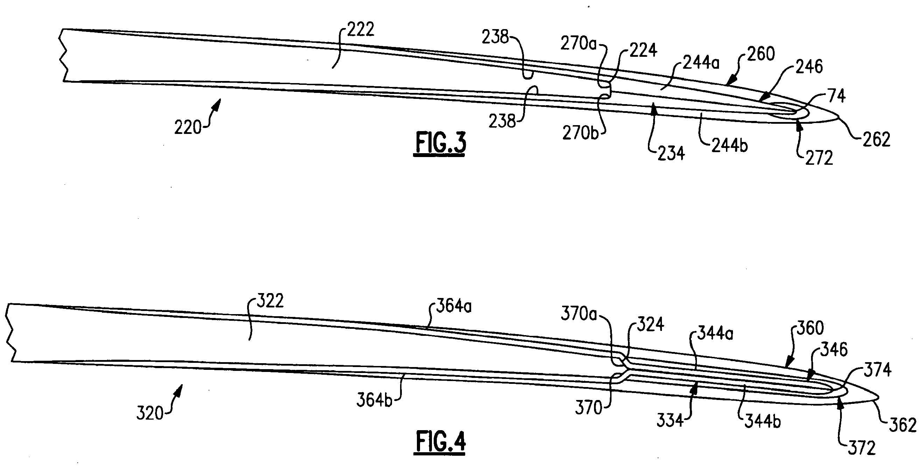

Figure 3 illustrates another embodiment airfoil assembly 220 that is modified relative to the previous example. In this example, the leading edge 224 of the airfoil body 222 is more bluntly shaped than in the previous examples. The sheath 234 is likewise formed to fit intimately over the leading edge 224 and the first and second plates 244a and 244b thereby include respective notches 270a and 270b on the inner side 238. In this case, each of the notches 270a and 270b abut against the leading edge 224 of the airfoil body 222.

The nose 246 of the sheath 234 is somewhat elongated in comparison to the nose 46 of the prior examples. In this case, the nose 246 extends forward relative to the notches 270a and 270b and terminates at a tip 74. Each of the first and second plates 244a and 244b tapers between the respective notches 270a and 270b and the tip 74. That is, each plate 244a and 244b becomes progressively thinner toward the tip 74. The exemplary shape facilitates absorbing energy from an impact on the leading edge 224 of the airfoil assembly 220. For instance, the elongated nose 246 provides additional titanium-based metallic material for absorbing more energy of the impact.

In this example, the indicator sheath 272 extends away from the airfoil body 222 past the tip 74 toward the tip 262. Sufficient wear of the tip 262 exposes the indicator sheath 272. As can be appreciated, wear exposes the indicator sheath 272 before the sheath 234 is exposed due to wear.

Figure 4 illustrates another example airfoil assembly 320 that also includes somewhat of a blunt leading edge 324. However, in this case, the walls of the first plate 334a and the second plate 334b, are relatively uniform between the respective notches 370a and 370b and the tip 374 of the nose 346. The walls of the sheath 360, however, are thicker in the area of the nose 346 and taper toward the rearward end 364a and 364b. In this design, the relatively thicker portions of the sheath 360 in comparison to the prior examples provide additional erosion resistance while the nose 346 of the sheath 334 provides ductility for absorbing the energy of a foreign object impact.

The indicator sheath 372 extends away from the airfoil body 322 past the tip 374 toward the tip 362. Wearing of the tip 362 exposes the indicator sheath 372 prior to the sheath 334.

As may be appreciated, utilizing separate and distinct plates in the illustrated examples to form the respective sheaths 34, 234, and 334 facilitates providing a low cost assembly that is relatively easy to construct. For instance, the plates may be individually manufactured to the designed shape and then assembled on to the airfoil body. In contrast, forming the sheaths from a single, monolithic piece of titanium material may be difficult to manufacture and would significantly increase the cost of the airfoil assembly.

Figure 5 illustrates another example airfoil assembly 320 that also includes somewhat of a blunt leading edge 324. In this example, a copper wire 92 is used as the indicator sheath 472. Fillets 94 secure the copper wire 92 to the sheath 460, which is formed by bending a piece of metal sheet stock 96. The metal sheet stock 96 is stainless steel in this example. The airfoil assembly 420 includes areas 98 established between the sheath 460 and the sheath 446 that are filled with an adhesive 442, in this example.

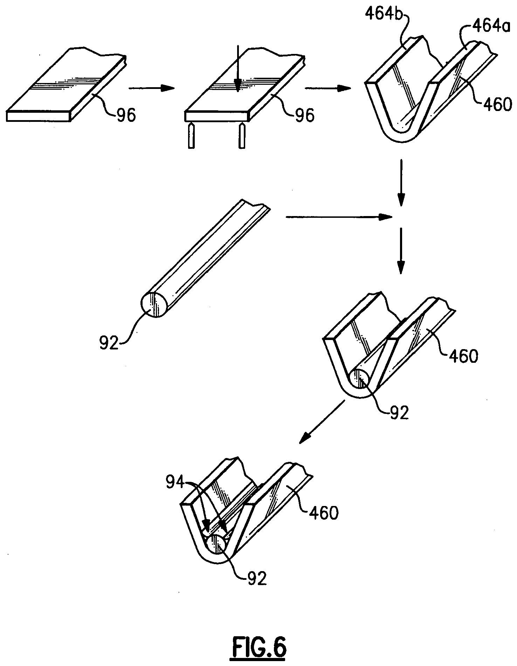

Figure 6 shows the manufacturing progression used to form and secure the indicator sheath 472 (the copper wire 92) to the sheath 460. The fillets 94 secure the copper wire 92 to the sheath 460 after the metal sheet stock 96 is bent in this example. For example, the copper wire 92 is coated in solder or tin, and the sheath 460 is baked in a furnace. The baking melts the solder, tin, or braze alloy which, when hardened, creates the fillets 94 that secure the copper wire 92 to the sheath 460.

In this example, the rearward ends 464a and 464b of the metal sheet stock 96 are not tapered. The airfoil body 422 includes notched areas 100 that receive the rearward ends 464a and 464b. In another example (not shown) the rearward ends 464a and 464b are machined to tapers prior to securing the sheath 460 and the indicator sheath 472 to the sheath 446.

Although a preferred embodiment has been disclosed, a worker of ordinary skill in this art would recognize that certain modifications would come within the scope of this invention. For that reason, the following claims should be studied to determine the true scope and content of this invention.

## Claims

1. An airfoil assembly (20;220;320;420) for use on an aircraft, the airfoil assembly comprising:
an airfoil body (22;222;322;422) extending between a leading edge (24), a trailing edge (26), a suction side (28), and a pressure side (30);
a first protective sheath (34;234;334;446) having an outer side (36) and an inner side (38) that forms a cavity for receiving at least a portion of the airfoil body, wherein an adhesive bonds the inner side to the leading edge of the airfoil body (22;222;322;422);
a second protective sheath (60;260;360;460),
**characterized in** comprising an indicator sheath (72;272;372;472) having an outer side (36) and an inner side (38), the indicator sheath being adhesively bonded to the first protective sheath, wherein at least a portion of the indicator sheath is positioned forward of the first sheath relative to the leading edge of the airfoil, wherein at least a portion of the second protective sheath (60;260;360;460) is positioned forward of the indicator sheath relative to the leading edge (24) of the airfoil.

2. The airfoil assembly of claim 1, wherein the indicator sheath (72;272;372;472) is formed from a different material than the first protective sheath (34;234;334;446) and the second protective sheath (60;260;360;460).

3. The airfoil assembly of claim 1, wherein the indicator sheath (72;272;372;472) is formed from a copper-based material, and preferably wherein the indicator sheath (72;272;372;472) is a copper wire.

4. The airfoil assembly of claim 1, 2 or 3, wherein weld fillets secure the indicator sheath (72;272;372;472) to the second protective sheath (60;260;360;460).

5. The airfoil assembly of any preceding claim, wherein the second protective sheath (60;260;360;460) is formed of a nickel-based metallic material.

6. The airfoil assembly of any preceding claim, wherein the first protective sheath (34;234;334;446) includes a first plate (44a;244a;344a) on the suction side of the airfoil body (22;222;322;422) and a second plate (44b;244b;344b) on the pressure side of the airfoil body (22;222;322;422) that meet at a nose (46;346;446) near the leading edge (24) that extends forward relative to the leading edge (24) of the airfoil body (22;222;322;422) and includes a seam where the first plate and the second plate meet, the indicator sheath having a portion forward the seam relative to the leading edge (24) of the airfoil.

7. The airfoil assembly of any preceding claim, wherein a wall thickness (50) of the first protective sheath (34;234;334;446) tapers from a nose at the leading edge (24) of the airfoil body to a rearward end (52a,52b) of the first protective sheath (34;234;334;446).

8. The airfoil assembly of any preceding claim, wherein a portion of the second protective sheath (60;260;360;460) is spaced from the first protective sheath (34;234;334;446) to establish an area that is filled with an adhesive (42;142) to bond the second protective sheath (60;260;360;460) to the first protective sheath (34;234;334;446).

9. The airfoil assembly of any preceding claim, wherein the second protective sheath (60;260;360;460) has an outer side and an inner side that forms a cavity for receiving at least a portion of the indicator sheath (72;272;372;472), the inner side of the second protective sheath (60;260;360;460) being bonded to the indicator sheath (72;272;372;472).

10. The airfoil assembly of any preceding claim, wherein the airfoil body (22;222;322;422) is a composite material comprising a polymer matrix and reinforcement fibers distributed within the polymer matrix.

11. The airfoil assembly of any preceding claim, wherein the airfoil body (22;222;322;422) includes surface portions that are covered by the first sheath (34;234;334;446) and other surface portions that are not covered by the first sheath (34;234;334;446), with a ratio of the covered portion to the uncovered portion that is about 0.1 -1.

12. An airfoil assembly wear indicating method for use on an aircraft, comprising:
providing an airfoil body (22;220;320;420) that extends between a leading edge (24), a trailing edge (26), a suction side (28), and a pressure side (30) with an indicator sheath (72;272;372;472), at least a portion of the indicator sheath (72;272;372;472) being secured between a first protective sheath (34;234;334;446) and a second protective sheath (60;260;360;460) near the leading edge of the airfoil body, the indicator sheath being adhesively bonded to the first protective sheath (34;234;334;446), the first sheath (34;234;334;446) having an inner side (36) that forms a cavity for receiving at least a portion of the airfoil body, wherein an adhesive bonds the inner side to the leading edge (24) of the airfoil, at least a portion of the indicator sheath (72;272;372;472) being positioned forward of the first protective sheath (34;234;334;446) relative to the leading edge (24) of the airfoil, and at least a portion of the second protective sheath (60;260;360;460) being positioned forward the indicator sheath (72;272;372;472) relative to the leading edge (24) of the airfoil.

13. The method of claim 12, wherein wearing the second protective sheath (60;260;360;460) exposes the indicator sheath (72;272;372;472).

14. The method of claim 13, further comprising:
when the indicator sheath (72;272;372;472) is exposed, repairing or replacing the second protective sheath (60;260;360;460) before the first protective sheath (34;234;334;446) is worn.

## Patentansprüche

1. Schaufelblattanordnung (20; 220; 320; 420) zur Verwendung an einem Luftfahrzeug, wobei die Schaufelblattanordnung umfasst:
einen Schaufelblattkörper (22; 222; 322; 422), der sich zwischen einer Vorderkante (24), einer Hinterkante (26), einer Ansaugseite (28) und einer Druckseite (30) erstreckt;
eine erste Schutzhülle (34; 234; 334; 446) mit einer Außenseite (36) und einer Innenseite (38), die einen Hohlraum zum Aufnehmen von wenigstens einem Abschnitt des Schaufelblattkörpers bildet, wobei ein Klebstoff die Innenseite mit der Vorderkante des Schaufelblattkörpers (22; 222; 322; 422) verbindet; und
eine zweite Schutzhülle (60; 260; 360; 460),
**dadurch gekennzeichnet, dass** sie eine Indikatorhülle (72; 272; 372; 472) mit einer Außenseite (36) und einer Innenseite (38) umfasst, wobei die Indikatorhülle durch Kleben mit der ersten Schutzhülle verbunden ist, wobei wenigstens ein Abschnitt der Indikatorhülle relativ zur Vorderkante des Schaufelblatts vor der ersten Hülle angeordnet ist, wobei wenigstens ein Abschnitt der zweiten Schutzhülle (60; 260; 360; 460) relativ zur Vorderkante (24) des Schaufelblatts vor der Indikatorhülle angeordnet ist.

2. Schaufelblattanordnung nach Anspruch 1, wobei die Indikatorhülle (72; 272; 372; 472) aus einem anderen Material als die erste Schutzhülle (34; 234; 334; 446) und die zweite Schutzhülle (60; 260; 360; 460) gebildet ist.

3. Schaufelblattanordnung nach Anspruch 1, wobei die Indikatorhülle (72; 272; 372; 472) aus einem kupferbasierten Material gebildet ist und die Indikatorhülle (72; 272; 372; 472) vorzugsweise ein Kupferdraht ist.

4. Schaufelblattanordnung nach Anspruch 1, 2 oder 3, wobei Kehlnähte die Indikatorhülle (72; 272; 372; 472) an der zweiten Schutzhülle (60; 260; 360; 460) befestigen.

5. Schaufelblattanordnung nach einem der vorangehenden Ansprüche, wobei die zweite Schutzhülle (60; 260; 360; 460) aus einem nickelbasierten Metallmaterial gebildet ist.

6. Schaufelblattanordnung nach einem der vorangehenden Ansprüche, wobei die erste Schutzhülle (34; 234; 334; 446) eine erste Platte (44a; 244a; 344a) an der Ansaugseite des Schaufelblattkörpers (22; 222; 322; 422) und eine zweite Platte (44b; 244b; 344b) an der Druckseite des Schaufelblattkörpers (22; 222; 322; 422) umfasst, die sich an einer Nase (46; 346; 446) nahe der Vorderkante (24) treffen, die sich relativ zur Vorderkante (24) des Schaufelblattkörpers (22; 222; 322; 422) nach vorne erstreckt und eine Naht beinhaltet, an der sich die erste Platte und die zweite Platte treffen, wobei die Indikatorhülle einen Abschnitt vor der Naht relativ zur Vorderkante (24) des Schaufelblatts aufweist.

7. Schaufelblattanordnung nach einem der vorangehenden Ansprüche, wobei eine Wanddicke (50) der ersten Schutzhülle (34; 234; 334; 446) sich von einer Nase an der Vorderkante (24) des Schaufelblattkörpers zu einem hinteren Ende (52a, 52b) der ersten Schutzhülle (34; 234; 334; 446) hin verjüngt.

8. Schaufelblattanordnung nach einem der vorangehenden Ansprüche, wobei ein Abschnitt der zweiten Schutzhülle (60; 260; 360; 460) von der ersten Schutzhülle (34; 234; 334; 446) beabstandet ist, um einen Bereich zu erstellen, der mit einem Klebstoff (42; 142) gefüllt ist, um die zweite Schutzhülle (60; 260; 360; 460) mit der ersten Schutzhülle (34; 234; 334; 446) zu verbinden.

9. Schaufelblattanordnung nach einem der vorangehenden Ansprüche, wobei die zweite Schutzhülle (60; 260; 360; 460) eine Außenseite und eine Innenseite aufweist, die einen Hohlraum zum Aufnehmen von wenigstens einem Abschnitt der Indikatorhülle (72; 272; 372; 472) bildet, wobei die Innenseite der zweiten Schutzhülle (60; 260; 360; 460) mit der Indikatorhülle (72; 272; 372; 472) verbunden ist.

10. Schaufelblattanordnung nach einem der vorangehenden Ansprüche, wobei der Schaufelblattkörper (22; 222; 322; 422) ein Verbundmaterial ist, das eine Polymermatrix und Verstärkungsfasern umfasst, die in der Polymermatrix verteilt sind.

11. Schaufelblattanordnung nach einem der vorangehenden Ansprüche, wobei der Schaufelblattkörper (22; 222; 322; 422) Oberflächenabschnitte, die von der ersten Hülle (34; 234; 334; 446) bedeckt sind, und andere Oberflächenabschnitte aufweist, die nicht von der ersten Hülle (34; 234; 334; 446) bedeckt sind, wobei ein Verhältnis des bedeckten Abschnitts zum unbedeckten Abschnitt etwa 0,1-1 beträgt.

12. Verfahren zur Schaufelblattanordnungsverschleißanzeige zur Verwendung an einem Luftfahrzeug, umfassend:
Bereitstellen eines Schaufelblattkörpers (22; 220; 320; 420), der sich zwischen einer Vorderkante (24), einer Hinterkante (26), einer Ansaugseite (28) und einer Druckseite (30) erstreckt, mit einer Indikatorhülle (72; 272; 372; 472), wobei wenigstens ein Abschnitt der Indikatorhülle (72; 272; 372; 472) zwischen einer ersten Schutzhülle (34; 234; 334; 446) und einer zweiten Schutzhülle (60; 260; 360; 460) nahe der Vorderkante des Schaufelblattkörpers befestigt wird, wobei die Indikatorhülle klebend mit der ersten Schutzhülle (34; 234; 334; 446) verbunden wird, wobei die erste Hülle (34; 234; 334; 446) eine Innenseite (36) aufweist, die einen Hohlraum zum Aufnehmen von wenigstens einem Abschnitt des Schaufelblattkörpers bildet, wobei ein Klebstoff die Innenseite mit der Vorderkante (24) des Schaufelblatts verbindet, wobei wenigstens ein Abschnitt der Indikatorhülle (72; 272; 372; 472) relativ zur Vorderkante (24) des Schaufelblatts vor der ersten Schutzhülle (34; 234; 334; 446) angeordnet wird und wenigstens ein Abschnitt der zweiten Schutzhülle (60; 260; 360; 460) relativ zur Vorderkante (24) des Schaufelblatts vor der Indikatorhülle (72; 272; 372; 472) angeordnet wird.

13. Verfahren nach Anspruch 12, wobei Verschleißen der zweiten Schutzhülle (60; 260; 360; 460) die Indikatorhülle (72; 272; 372; 472) freilegt.

14. Verfahren nach Anspruch 13, ferner umfassend:
wenn die Indikatorhülle (72; 272; 372; 472) freiliegt, Reparieren oder Ersetzen der zweiten Schutzhülle (60; 260; 360; 460), bevor die erste Schutzhülle (34; 234; 334; 446) verschlissen ist.

## Revendications

1. Ensemble de surface portante (20 ; 220 ; 320 ; 420) destiné à être utilisé sur un aéronef, l'ensemble de surface portante comprenant :
un corps de surface portante (22 ; 222 ; 322 ; 422) s'étendant entre un bord d'attaque (24), un bord de fuite (26), un côté aspiration (28) et un côté pression (30) ;
une première gaine protectrice (34 ; 234 ; 334 ; 446) ayant un côté externe (36) et un côté interne (38) qui forme une cavité pour recevoir au moins une partie du corps de surface portante, dans lequel un adhésif lie le côté interne au bord d'attaque du corps de surface portante (22 ; 222 ; 322 ; 422) ; et
une seconde gaine protectrice (60 ; 260 ; 360 ; 460),
**caractérisé en ce qu'**il comprend une gaine indicatrice (72 ; 272 ; 372 ; 472) ayant un côté externe (36) et un côté interne (38), la gaine indicatrice étant liée de manière adhésive à la première gaine protectrice, dans lequel au moins une partie de la gaine indicatrice est positionnée à l'avant de la première gaine par rapport au bord d'attaque de la surface portante, dans lequel au moins une partie de la seconde gaine protectrice (60 ; 260 ; 360 ; 460) est positionnée à l'avant de la gaine indicatrice par rapport au bord d'attaque (24) de la surface portante.

2. Ensemble de surface portante selon la revendication 1, dans lequel la gaine indicatrice (72 ; 272 ; 372 ; 472) est formée à partir d'un matériau différent de celui de la première gaine protectrice (34 ; 234 ; 334 ; 446) et de la seconde gaine protectrice (60 ; 260 ; 360 ; 460).

3. Ensemble de surface portante selon la revendication 1, dans lequel la gaine indicatrice (72 ; 272 ; 372 ; 472) est formée à partir d'un matériau à base de cuivre, et de préférence dans lequel la gaine indicatrice (72 ; 272 ; 372 ; 472) est un fil de cuivre.

4. Ensemble de surface portante selon la revendication 1, 2 ou 3, dans lequel des filets de soudure fixent la gaine indicatrice (72 ; 272 ; 372 ; 472) à la seconde gaine protectrice (60 ; 260 ; 360 ; 460).

5. Ensemble de surface portante selon une quelconque revendication précédente, dans lequel la seconde gaine protectrice (60 ; 260 ; 360 ; 460) est formée d'un matériau métallique à base de nickel.

6. Ensemble de surface portante selon une quelconque revendication précédente, dans lequel la première gaine protectrice (34 ; 234 ; 334 ; 446) comporte une première plaque (44a ; 244a ; 344a) sur le côté aspiration du corps de surface portante (22 ; 222 ; 322 ; 422) et une seconde plaque (44b ; 244b ; 344b) sur le côté pression du corps de surface portante (22 ; 222 ; 322 ; 422) qui se rencontrent au niveau d'un nez (46 ; 346 ; 446) près du bord d'attaque (24) qui s'étend vers l'avant par rapport au bord d'attaque (24) du corps de surface portante (22 ; 222 ; 322 ; 422) et comporte un joint où la première plaque et la seconde plaque se rencontrent, la gaine indicatrice ayant une partie à l'avant du joint par rapport au bord d'attaque (24) de la surface portante.

7. Ensemble de surface portante selon une quelconque revendication précédente, dans lequel une épaisseur de paroi (50) de la première gaine protectrice (34 ; 234 ; 334 ; 446) s'effile à partir d'un nez au niveau du bord d'attaque (24) du corps de surface portante vers une extrémité arrière (52a, 52b) de la première gaine protectrice (34 ; 234 ; 334 ; 446).

8. Ensemble de surface portante selon une quelconque revendication précédente, dans lequel une partie de la seconde gaine protectrice (60 ; 260 ; 360 ; 460) est espacée de la première gaine protectrice (34 ; 234 ; 334 ; 446) pour établir une surface qui est remplie d'un adhésif (42 ; 142) pour lier la seconde gaine protectrice (60 ; 260 ; 360 ; 460) à la première gaine protectrice (34 ; 234 ; 334 ; 446).

9. Ensemble de surface portante selon une quelconque revendication précédente, dans lequel la seconde gaine protectrice (60 ; 260 ; 360 ; 460) a un côté externe et un côté interne qui forme une cavité pour recevoir au moins une partie de la gaine indicatrice (72 ; 272 ; 372 ; 472), le côté interne de la seconde gaine protectrice (60 ; 260 ; 360 ; 460) étant lié à la gaine indicatrice (72 ; 272 ; 372 ; 472).

10. Ensemble de surface portante selon une quelconque revendication précédente, dans lequel le corps de surface portante (22 ; 222 ; 322 ; 422) est un matériau composite comprenant une matrice polymère et des fibres de renforcement réparties à l'intérieur de la matrice polymère.

11. Ensemble de surface portante selon une quelconque revendication précédente, dans lequel le corps de surface portante (22 ; 222 ; 322 ; 422) comporte des parties de surface qui sont couvertes par la première gaine (34 ; 234 ; 334 ; 446) et d'autres parties de surface qui ne sont pas couvertes par la première gaine (34 ; 234 ; 334 ; 446), avec un rapport de la partie couverte sur la partie non couverte qui est d'environ 0,1-1.

12. Procédé d'indication d'usure d'ensemble de surface portante destiné à être utilisé sur un aéronef, comprenant :
la fourniture d'un corps de surface portante (22 ; 220 , 320 ; 420) qui s'étend entre un bord d'attaque (24), un bord de fuite (26), un côté aspiration (28) et un côté pression (30) avec une gaine indicatrice (72 ; 272 ; 372 ; 472), au moins une partie de la gaine indicatrice (72 ; 272 ; 372 ; 472) étant fixée entre une première gaine protectrice (34 ; 234 ; 334 ; 446) et une seconde gaine protectrice (60 ; 260 ; 360 ; 460) près du bord d'attaque du corps de surface portante, la gaine indicatrice étant liée de manière adhésive à la première gaine protectrice (34 ; 234 ; 334 ; 446), la première gaine (34 ; 234 ; 334 ; 446) ayant un côté interne (36) qui forme une cavité pour recevoir au moins une partie du corps de surface portante, dans lequel un adhésif lie le côté interne au bord d'attaque (24) de la surface portante, au moins une partie de la gaine indicatrice (72 ; 272 ; 372 ; 472) étant positionnée à l'avant de la première gaine protectrice (34 ; 234 ; 334 ; 446) par rapport au bord d'attaque (24) de la surface portante, et au moins une partie de la seconde gaine protectrice (60 ; 260 ; 360 ; 460) étant positionnée à l'avant de la gaine indicatrice (72 ; 272 ; 372 ; 472) par rapport au bord d'attaque (24) de la surface portante.

13. Procédé selon la revendication 12, dans lequel l'usure de la seconde gaine protectrice (60 ; 260 ; 360 ; 460) expose la gaine indicatrice (72 ; 272 ; 372 ; 472).

14. Procédé selon la revendication 13, comprenant en outre :
lorsque la gaine indicatrice (72 ; 272 ; 372 ; 472) est exposée, la réparation ou le remplacement de la seconde gaine protectrice (60 ; 260 ; 360 ; 460) avant usure de la première gaine protectrice (34 ; 234 ; 334 ; 446).
